# EUROPEAN PATENT APPLICATION

(11) **EP 2 164 191 A1**
(43) Date of publication of application: **17.03.2010**
(21) Application number: 08164237.3
(22) Date of filing: 12.09.2008
(51) Int. Cl.: H04B 17/00

(54) **Low power received signal strength indicator**

(71) Applicant: Seiko Epson Corporation, Shinjuku-ku Tokyo 163-0811 (JP)
(72) Inventor: Sanchez Rodriguez, Trinidad, 41092 Sevilla (ES); Lujan Martinez, Clara Isabel, 41092 Sevilla (ES); Gonzalez Carvajal, Ramon, 41092 Sevilla (ES); Munoz Chavero, Fernando, 41092 Sevilla (ES); Lopez-Martin, Antonio, 31006 Pamplona (ES); Gomez Galan, Juan Antonio, 41092, Sevilla (ES); Rubia Marcos, Carlos, 41092, Sevilla (ES)
(74) Representative: Carpintero Lopez, Francisco

(57) **Abstract**

A received signal strength indicator (170, 270) for obtaining a received signal strength indicator signal (b₁ b₂... b_{N-1} b_{N}) from an in-phase signal component (i(t)) and a quadrature signal component (q(t)), which comprises: first means for squaring (271, 371) an in-phase signal component (i(t)); second means for squaring (272, 372) a quadrature signal component (q(t)); adding means (273, 473) having a first input connected to the output (I_{o_I}) of said first means for squaring (271, 371) and a second input connected to the output (I_{o_Q}) of said second means for squaring (272, 372), for adding said first and second outputs (I_{o_I}, I_{o_Q}) of said respective first and second means for squaring (271, 371; 272, 372). It also comprises means for digitizing (274, 574) the output (Iₛ) of said adding means (273, 473), said means for digitizing (274, 574) being configured for providing an output digital code (b₁ b₂... b_{N-1} b_{N}) which represents a received signal strength indicator of a received signal.

## Description

### FIELD OF THE INVENTION

The present invention relates to a received signal strength indicator circuit for a zero intermediate frequency radio device, such as a receiver or a transceiver.

### STATE OF THE ART

In wireless applications the received signal features a wide dynamic range. A magnitude control is thus required to keep the signal approximately constant and featuring enough signal-to-noise ratio (SNR) at the demodulator input for proper detection as well as for carrier sensing in Carrier Sense Multiple Access (CSMA) schemes. Moreover, low power consumption in a low voltage environment is mandatory for wireless design.

A received signal strength indicator (RSSI) circuit is normally employed to represent the received signal strength. Depending on its value (strength), it can be used to adjust gain stages of different blocks and power down the receiver.

A conventional RSSI for low-IF architectures is generally realized in logarithmic form as the wide dynamic variation of the received signal can be represented within a limited range. Also, a variable gain amplifier (VGA) is required to obtain the desired dynamic range. Successive detection architectures are adopted for the implementation of the logarithmic amplifier composed of several full-wave rectifiers and a low-pass filter.

A possible solution to save power is to integrate these two functions into a single circuit, by sharing a single amplifier chain for both VGA and RSSI, as proposed by Chun-Pang Wu and Hen-Wai Tsao in "A 110-MHz 84-dB CMOS Programmable Gain Amplifier with Integrated RSSI Function", IEEE Journal of Solid-State Circuits, vol. 40, no. 6, June 2005).

A similar approach is presented in US patent application US-5338985-A, wherein a RSSI comprises cascaded amplifiers that amplify an intermediate frequency signal. These signals are rectified and after voltage to current conversion, currents are scaled and added. The resulting RSSI signal approximates a linear function of the logarithm of the input signal.

However, in a zero-IF receiver this kind of circuits cannot be used, as there are moments at which there is no presence of the carrier signal. At those moments detection fails.

In US patent US-6721548-B1, a received signal strength indicator for operation at zero or low intermediate frequency and a related method are disclosed. It is based on several blocks: a hard limiter for calculating the absolute value of a signal; a block for summing the signals coming from the I-branch and Q-branch of the receiver; a block for obtaining the logarithmic value of the previous sum; a filter for low-pass filtering that logarithmic value; and for obtaining the strength value of the signal. In this disclosure, the obtained rssi signal is a concrete value, either expressed in natural units or in logarithmic units.

However, although the scheme disclosed in US-6721548-B1 to obtain the received signal strength of the received signal works for zero intermediate frequency receivers, its implementation is not optimal. First of all, the blocks selected for the combination of signals in phase and quadrature are complex in terms of silicon area. Moreover, they do not make optimal use of the properties of the square law of metal-oxide-semiconductor transistors to calculate the amplitude of the combined signal (phase and quadrature). Finally, the complexity of the scheme drives to a solution that consumes more power than necessary for wireless application.

### SUMMARY OF THE INVENTION

It is a primary aim of the present invention to provide a new scheme to implement a received signal strength indicator circuit that improves RSSI circuits of the state of the art.

This is achieved by means of a received signal strength indicator circuit at zero intermediate frequency using a RSSI circuit with a simple topology and low power consumption. This low power consumption is obtained by means of an advantageous scheme used to obtain the RSSI signal using a flash A/D converter with very low quiescent power consumption. The signal obtained from the RSSI circuit of the invention can be used for controlling functions in the transceiver or to provide signal strength information to a system in which the transceiver operates.

It is an object of the present invention to provide a received signal strength indicator for providing a received signal strength indicator signal from an in-phase signal component and a quadrature signal component, which comprises: first means for squaring an in-phase signal component; second means for squaring a quadrature signal component; adding means having a first input connected to the output of said first means for squaring and a second input connected to the output of said second means for squaring, for adding said first and second outputs of said respective first and second means for squaring. It also comprises means for digitizing the output of said adding means, said means for digitizing being configured for providing an output digital code which represents a received signal strength indicator of a received signal.

Preferably, the adding means comprises a capacitor for filtering any ripple.

Preferably, the means for digitizing is an analog to digital converter, and more preferably, a flash analog to digital converter.

The A/D converter is preferably configured to work in current mode.

The adding means preferably comprises a current mirror for copying a current corresponding to the added signal. In a preferred embodiment, that current mirror is a MOS cascode current mirror.

In a preferred embodiment, the analog to digital converter comprises comparison means for comparing the copied current obtained at the adding means to a plurality of fixed, current references for obtaining a corresponding plurality of output voltage outputs which form the output digital code. Preferably, the comparison means comprises a plurality of transistors for mirroring said copied current and a plurality of transistors for comparing said fixed, current references to the copied current.

Preferably, the first and second means for squaring operate with differential current inputs.

The invention also provides a radio device which comprises a received signal strength indicator like the one previously mentioned. Preferably, the radio device is a zero intermediate frequency radio device.

The advantages of the proposed invention will become apparent in the description that follows.

### BRIEF DESCRIPTION OF THE DRAWINGS

To complete the description and in order to provide for a better understanding of the invention, a set of drawings is provided. Said drawings form an integral part of the description and illustrate a preferred embodiment of the invention, which should not be interpreted as restricting the scope of the invention, but rather as an example of how the invention can be embodied. The drawings comprise the following figures:
Figure 1 shows a block diagram of a receiver comprising a RSSI according to an embodiment of the present invention.
Figure 2 shows a block diagram of a received signal strength indicator (RSSI) circuit according to an embodiment of the present invention.
Figure 3 shows a block diagram of a squarer circuit according to an embodiment of the present invention.
Figure 4 shows a block diagram of an adder and filtering scheme according to an embodiment of the present invention.
Figure 5 shows a flash analog to digital converter according to an embodiment of the present invention.

### DESCRIPTION OF PREFERRED EMBODIMENTS OF THE INVENTION

In the context of the present invention, the terms "approximately", "about", "around", "almost", "near" and terms of its family (such as "approximate", etc.) should be understood as indicating values very near to those which accompany the aforementioned term. That is to say, a deviation within reasonable limits from an exact value should be accepted, because the expert in the technique will understand that such a deviation from the values indicated is inevitable due to measurement inaccuracies, etc.

The implementation of the present invention can be carried out as follows:

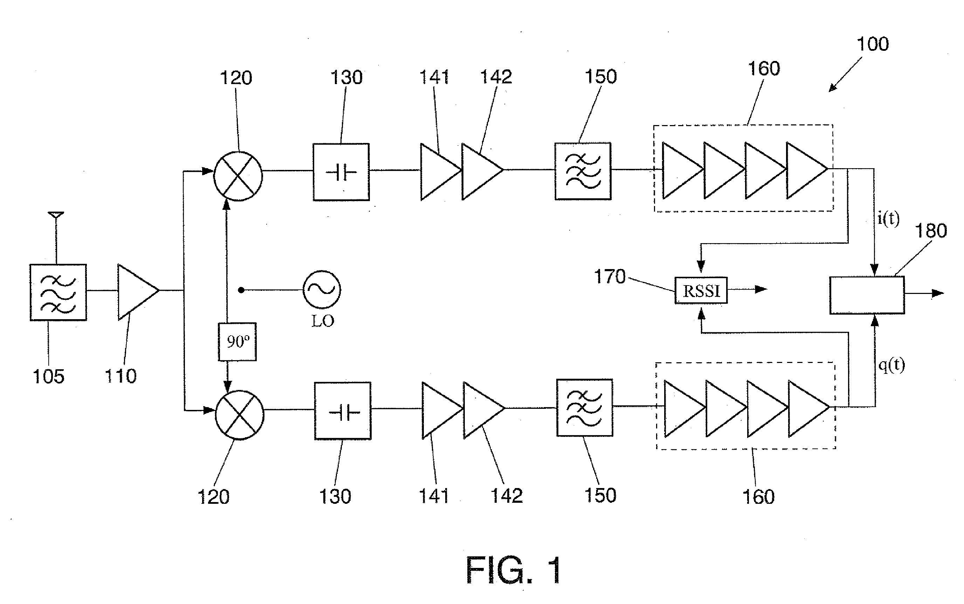

Figure 1 shows a complete block diagram of a zero intermediate frequency receiver 100. The receiver 100 comprises an I-branch and a Q-branch. After a receiving antenna, a first filter is used. A low noise radio frequency amplifier (LNA) 110 drives a pair of quadrature mixers 120, a first one located in a Q-branch and a second one located in an I-branch, the signal passing through the Q-branch being shifted 90° with respect to the signal passing through the I-branch. Each branch of the receiver chain is thus formed by the corresponding branch of the quadrature mixer 120. The quadrature mixer 120 is preferably an active mixer in order to avoid preamplifier stages. A notch filter 130 is used at each branch for eliminating the DC offset due to local oscillation (LO) leakage and mismatch. Next, two cascaded voltage gain amplifiers 141 142 are used, followed by a low pass channel filter 150. Next, a limiter 160 is cascaded at each of the branches. The outputs i(t) q(t) of these limiters 160 are the inputs of a RSSI circuit 170. The outputs i(t) q(t) of the limiters 160 are also the inputs of a demodulator 180, which in turn outputs the received data.

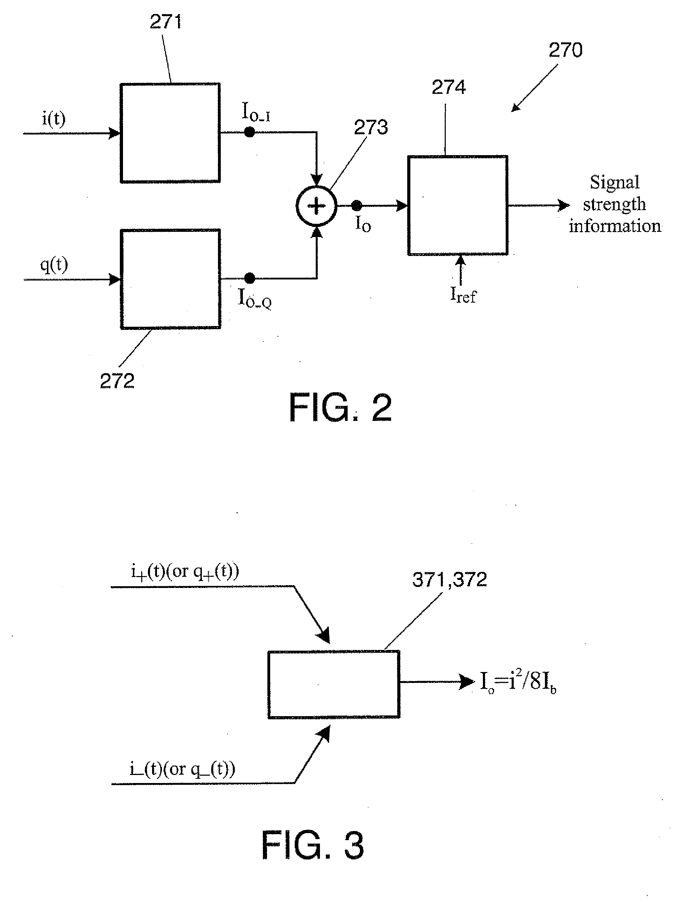

Figure 2 shows a block diagram of a preferred embodiment of the received signal strength indicator (RSSI) 270. The RSSI circuit 270 comprises two squarer circuits 271 272, an adder 273 that includes a filtering function and an A/D converter 274. Preferably, the A/D converter 274 is a flash A/D converter.
   As shown in figure 2, the RSSI circuit 270 receives two currents: one is the in-phase component i(t) from the I-branch of the receiver 100 and the other one is the quadrature component q(t) from the Q-branch of the receiver 100. Each current is squared by a squarer block 271 272. Each squared current thus generated is summed up by an adder 273. Finally, the current obtained at the adder 273 is converted to a digital value by an analog to digital converter 274. As detailed later, the A/D converter 274 is implemented by a comparator scheme based on a reference current I_{ref}. The output of this block 274 is the RSSI digital output which corresponds to the signal strength.
   In this preferred embodiment, all the signal processing is made in current mode, although alternatively, voltage-mode implementations of the invention are also possible and can be devised straightforwardly.
   Gains of several blocks of the receiver chain are controlled by the digital RSSI code. The received signal strength indicador (RSSI) 270 obtains, at its output, a group of digital bits ("1", "0"), also called a digital RSSI code. Depending on the output code, which indicates the strength of the received signal, and by means of certain logic, the gain of the receiver chain is controlled.
Figure 3 shows a block diagram of any of the squarer circuits 371 372 of figure 2. The squarer 371 372 is aimed at squaring (raising to the power of two) the incoming signal. This block 371 372 receives as inputs the differential output currents of the limiters 160. Preferably, the multistage limiters 160 comprise a cascade of differential amplifiers. Usually, in squarer circuits, the outputs are the square of the input multiplied by a factor. In this particular embodiment, the output Iₒ of each squarer 371 372 is given by: *i²*/*8·I_{b}* where I_{b} is the bias current of this circuit. This particular implementation is based on the scheme proposed by Boonchai Boonchu and Wanlop Surakampontorn in "A CMOS current-mode squarer/rectifier circuit", ISCAS '03, which provides good benefits in terms of consumption. Any other squarer providing similar results could be used instead. If, alternatively to this current mode implementation, a voltage-mode implementation is chosen, the currents (*i*, *I_{b}*) of the former expression are substituted by corresponding voltage ones (*v*, *V_{b}*).

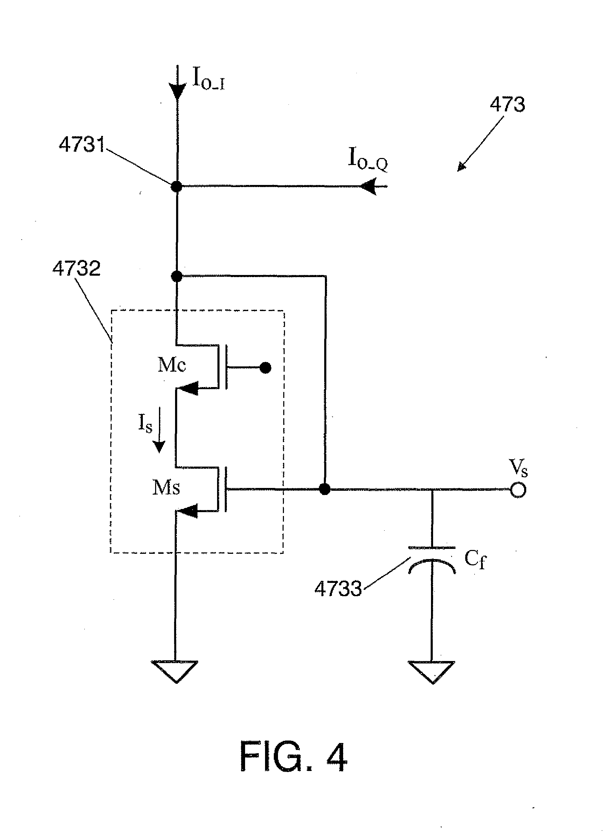

Figure 4 shows a detailed implementation 473 of the adder circuit 273. It performs the sum of the squared signals I_{o_I} I_{o_Q} and filters, by means of a capacitor 4733, the ripple of the summed-up signal, caused by the high-pass notch filter 130 used for the elimination of DC offset.

It is well-known that one of the main problems in a zero IF receiver is the elimination of DC offset due to LO (Local Oscillator) leakage and mismatch. In order to solve this problem, an analog notch filter 130 (preferably comprising a first order RC high-pass filter) has been introduced in the receiver chain, as illustrated in figure 1. The presence of this filter 130 makes the in-phase and quadrature signals not be completely orthogonal, as the near-DC components of their spectrums are eliminated. This fact causes a considerable ripple after the output current signals are squared and added. The capacitor C_{f} 4733 in figure 4 filters this ripple before converting the analog signal to a digital value. The value for this capacitor C_{f} 4733 is selected depending on the bandwidth of a specific application. For example, for a Bluetooth application (around 1 MHz signal bandwidth) this capacitor C_{f} 4733 takes a value equal to or near 10 pF.

The sum performed by the adder 473 is made as follows: the outputs (which are, in this preferred embodiment, two currents I_{o_I} I_{o_Q}) coming from corresponding squarers 371 372 are injected at a node 4731. A capacitor 4733 filters the ripple. The summed current I_{S} flows into a MOS cascode current mirror 4732. Preferably, this cascode current mirror 4732 consists of a first transistor Mc and a second transistor Ms. This adder 473 is a conventional one. It is appreciated for its simplicity, but any other alternative adder could be used instead. As can be appreciated, this circuit 473 stands out for its simplicity due to the current mode signal processing and the absence of active blocks, such as operational amplifiers with feedback resistors. The purpose of the cascode current mirror 4732 is to copy the I_{S} current to the means for digitizing the output of the adder 473. This means for digitizing is preferably an A/D converter 274.

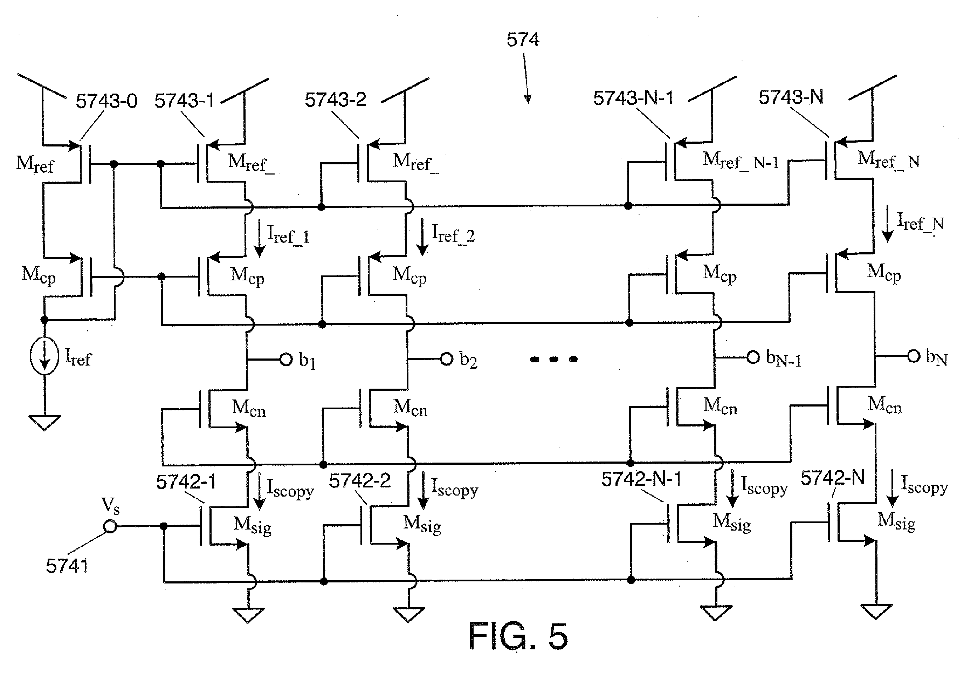

Figure 5 shows a detailed implementation of a preferred analog to digital converter 574. This preferred A/D converter accomplishes the whole processing in current mode. Alternatively, it can be implemented in voltage mode. It is a flash analog to digital converter. Its operation is based on the comparison of the filtered signal (represented in figure 5 by reference sign I_{scopy}) with several fixed current references I_{ref_1} I_{ref_2}... I_{ref_N}, so that when the current to be compared is smaller than the constant reference, the output voltage takes a low level and vice versa. The values of the current references I_{ref_1} I_{ref_2}... I_{ref_N} are selected as a function of the desired resolution to be obtained at the comparison of the corresponding currents and therefore as a function of the amount of bits which form part of the converter. The number N of current references can be chosen by the circuit designer. In a particular example, which should not be interpreted in a limiting way, 6 current references have been chosen I_{ref_1} I_{ref_2} I_{ref_3} I_{ref_4} I_{ref_5} I_{ref_6}. This number N of current references depends on the currents range managed by the limiter and by the desired accuracy. Currents I_{scopy} are a copy of current Iₛ (figure 4), which flows through node Vₛ (figure 4) and is injected to transistors Msig 5742-1 5742-2... 5742-N (at node 5741 in figure 5). This way, N voltage values are obtained, depending on the number of references employed, which form an N-bit word.

Basically, this circuit operates as follows: At node 5741, the output of the adder 473 is connected. The copy (I_{scopy}) of the current Iₛ of the previous block 473 is mirrored at several branches through transistors M_{sig} 5742-1 5742-2... 5742-N-1 5742-N and compared with scaled replicas of the fixed reference current I_{ref} through transistors M_{ref} 5743-0 5743-1 5743-2... 5743-N-1 5743-N. Transistors M_{cp} and M_{cn} are used in order to obtain current copies as exact as possible. If the signal value Iₛ (or I_{scopy}) is higher than the reference current value I_{ref}, the voltage of the output node b₁ b₂... b_{N-1} b_{N} of the branch goes to ground GND. This can be considered as a low level (logic zero). If the signal value Iₛ (I_{scopy}) is lower than the reference current I_{ref}, the voltage of the output node b₁ b₂... b_{N-1} b_{N} goes to a fixed value V_{DD} and a logic one can be understood. The voltage values of the output nodes of every branch (b₁ b₂... b_{N-1} b_{N}) that form the A/D converter 574 give N bits that provide the received signal strength indicator signal. Note that the A/D converter 574 features low quiescent power consumption while involving simplicity and compactness. This means that, once the comparison has been carried out, the consumption of all the branches with a voltage output near to the positive supply rail is almost zero, because through each of these branches of the A/D converter 574, reference current sources work in the cut-off region. Only the respective reference currents I_{ref_1} I_{ref_2} ... I_{ref_N} of the branches with a voltage output near the negative supply rail flow from the positive to the negative supply rail, which is very low power consumption as these currents are scaled to be low valued. That is the reason why the quiescent power consumption is practically negligible.

These properties make this invention especially suitable for portable applications. Non-limiting examples of such applications are: Bluetooth radio receiver, cellular radio devices, cordless telephones, wireless local area network radio devices or any other suitable radio devices.

A received signal strength indicator has been described, which obtains a value of the power of a received signal in a different way from conventional RSSI circuits: While prior art RSSI circuits provide such value in absolute terms (either in natural or logarithmic form), the received signal strength indicator of the present invention provides a digital output (a digital code), from which the power level of the received signal can be deduced. In order to deduce such power level, knowledge of the relationship between that output digital code and the currents level managed by the limiter 160 (in turn dependent on the gain of the receiving chain) is required.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiments described herein, but also encompasses any variations that may be considered by any person skilled in the art (for example, as regards the choice of components, configuration, etc.), within the general scope of the invention as defined in the appended claims.

## Claims

1. A received signal strength indicator (170, 270) for providing a received signal strength indicator signal (b₁ b₂... b_{N-1} b_{N}) from an in-phase signal component (i(t)) and a quadrature signal component (q(t)), which comprises:
- first means for squaring (271, 371) an in-phase signal component (i(t));
- second means for squaring (272, 372) a quadrature signal component (q(t));
- adding means (273, 473) having a first input connected to the output (I_{o_I}) of said first means for squaring (271, 371) and a second input connected to the output (I_{o_Q}) of said second means for squaring (272, 372), for adding said first and second outputs (I_{o_I}, I_{o_Q}) of said respective first and second means for squaring (271, 371; 272, 372);
**characterised in that** it further comprises means for digitizing (274, 574) the output (Iₛ) of said adding means (273, 473), said means for digitizing (274, 574) being configured for providing an output digital code (b₁ b₂... b_{N-1} b_{N}) which represents a received signal strength indicator of a received signal.

2. The received signal strength indicator (170, 270) of claim 1, wherein said adding means (273, 473) comprises a capacitor (4733) for filtering any ripple.

3. The received signal strength indicator (170, 270) of either claim 1 or 2, wherein said means for digitizing (274, 574) is an analog to digital converter (274, 574).

4. The received signal strength indicator (170, 270) of claim 3, wherein said analog to digital converter (274, 574) is a flash analog to digital converter (274, 574).

5. The received signal strength indicator (170, 270) of either claim 3 or 4, wherein said A/D converter is configured to work in current mode.

6. The received signal strength indicator (170, 270) of claim 5, wherein said adding means (273, 473) comprises a current mirror (4732) for copying (I_{scopy}) a current (Iₛ) corresponding to the added signal.

7. The received signal strength indicator (170, 270) of claim 6, wherein said current mirror (4732) is a MOS cascode current mirror.

8. The received signal strength indicator (170, 270) of either claim 6 or 7, wherein said analog to digital converter (574) comprises comparison means for comparing the copied current (I_{scopy}) obtained at the adding means (273, 473) to a plurality of fixed, current references (I_{ref_1}, I_{ref_2},... I_{ref_N}) for obtaining a corresponding plurality of output voltage outputs which form said output digital code (b₁ b₂... b_{N-1} b_{N}).

9. The received signal strength indicator (170, 270) of claim 8, wherein said comparison means comprises a plurality of transistors (5742-1 5742-2... 5742-N-1 5742-N) for mirroring said copied current (I_{scopy}) and a plurality of transistors (5743-0 5743-1 5743-2... 5743-N-1 5743-N) for comparing said fixed, current references (I_{ref_1}, I_{ref_2},... I_{ref_N}) to said copied current (I_{scopy}).

10. The received signal strength indicator (170, 270) of any preceding claim, wherein said first and second means for squaring (271, 371; 272, 372) operate with differential current inputs.

11. A radio device (100) which comprises a received signal strength indicator (170, 270) according to any preceding claim.

12. The radio device (100) of claim 11, which is a zero intermediate frequency radio device.
